Europäisches Patentamt

European Patent Office

Office européen des brevets

(11) Publication number: **0 226 430**
**A2**

(12) # EUROPEAN PATENT APPLICATION

(21) Application number: **86309563.4**

(22) Date of filing: **09.12.86**

(51) Int. Cl.⁴: **G01N 21/88** , **G01N 33/36**

(30) Priority: **13.12.85 AU 3871/85**

(43) Date of publication of application:
**24.06.87 Bulletin 87/26**

(84) Designated Contracting States:
**AT BE CH DE ES FR GB GR IT LI LU NL SE**

(71) Applicant: **UNISEARCH LIMITED**
**221-227 Anzac Parade**
**Kensington New South Wales, 2033(AU)**

(72) Inventor: **Farah, Boshra D.**
**15/52 Warialda Street**
**Kogarah New South Wales(AU)**
Inventor: **Woo, Jae L.**
**3 Valewood Crescent**
**Eastwood New South Wales(AU)**
Inventor: **Mee, David H.**
**2 Kelly Street**
**Henley New South Wales(AU)**

(74) Representative: **Jenkins, Peter David et al**
**Page White & Farrer 5 Plough Place New**
**Fetter Lane**
**London EC4A 1HY(GB)**

(54) **Measurement of foreign matter in fibre assemblies.**

(57) A method of measuring the amount and type of foreign matter in a fibre assembly by scanning the assembly with a video camera and allocating a brightness or colour value to each pixel of the scan. The scanning preferably occurs with transmitted light. The number of pieces of foreign matter being detected by allocating a count to each group of adjacent pixels in excess of a predetermined value or a colour corresponding to a predetermined colour. The type of foreign matter being determined by scanning the image of each item of detected foreign matter and calculating a shape factor relative to each item then comparing each shape factor with predetermined shape factors calculated for known types of foreign matter.

FIG. 1

## Measurement of Foreign Matter in Fibre Assemblies

The present invention relates to a method and means for measurement and/or identification of foreign matter in fibre assemblies, e.g. vegetable matter or black fibres in wool or trash in cotton. Such measurements may be carried out in the laboratory on selected samples, on-line for automatic quality control of foreign matter removal processes or in the field, e.g. for testing fleece before or after shearing.

Existing standardised methods and means for carrying out such measurements may use one of the following techniques:

1. Manual sorting and counting (or weighing) of the different types of foreign matter particles contaminating samples of known mass selected under the standard condition, e.g. sorting and counting (or weighing) of the different types of vegetable matter in wool;

2. Chemically dissolving of either the foreign matter or the fibre assemblies of samples having known mass and evaluation of the degree of foreign matter contamination depending on the mass of the insoluble matter relative to the total mass of the sample, e.g. determination of the vegetable matter content in wool using the method of the "total alkali-insoluble impurities"; or

3. Mechanical separation of the foreign matter from the fibre assemblies and determination of the foreign matter content depending on the mass of the separated matter relative to the total mass of the sample before separation, e.g. determination of the trash content (or non-lint content) in cotton using the Shirley Analyzer.

The techniques mentioned above are time consuming, labour-intensive and therefore expensive. Furthermore, they are not suited to on-line measurements or measurements in the field.

To render objective the classer's subjective task in cotton grading and the role of the Shirley Analyzer, attempts have been made using an optical and photoelectronic device, known as a "trashmeter". In fact, the trashmeter is a modification and development of the "Cotton Colorimeter" - (1929) and the "Grade Scanner" (1941). The principle of the trashmeter relies on scanning the surface area of a cotton sample using line-by-line black/white image analysis.

Another method as shown in U.K. Patent Application GB2095828A proposes a method and means for detection of defects in a fibrous array. In this method the fibre sample is prepared through a drafting system into a moving fibrous array (fibre strand) with certain specifications (lg/m and 128 mm in width). The moving fibrous material passes through two groups of light sources and linear photodiode arrays (for instance, each array comprises 1024 photodiodes spaced 25 $\mu$m apart from each other to form a 15 to 36 $\mu$m band). The first photodiode array senses the shadow or the transmitted light which passes through the moving fibrous material, and the second one receives the light reflected from the moving strand. As disclosed in that patent specification: "A train of 1024 pulses is obtained from each sensor, the amplitude of each pulse being proportional to the light falling on the respective photodiode". The method proposes the synchronization of the signals output of the two photodiode arrays such that by processing the signals through special computation, detection and identification of the defects in the fibrous array may be carried out. In this, the principle applied to measure the size of the defect relies on measuring the time taken for passing the defect across the sensor multiplied by the speed of the fibrous array, which speed was assumed to be constant.

The present invention consists in a method of quantitatively measuring the amount and/or type of foreign matter contained in a fibre assembly comprising recording an image of that assembly and analysing that record by digital means which divides the record of the image into a plurality of digitized picture elements to each of which a brightness or colour value is ascribed, the brightness or colour value being within a range of values defined by predetermined upper and lower brightness or colour limit values, respectively; processing the brightness or colour values of said elements to determine the amount and/or type of foreign matter within the assembly.

Preferably the image of the assembly is perceived by a video camera and the recorded image is analysed on the basis of the pixels of the video image corresponding to the picture elements as aforesaid.

The present invention will now be described by way of example with reference to the accompanying drawings, in which:-

Fig. 1 is a schematic representation of a first embodiment of the invention in the form of apparatus for measurement of foreign matter in fibre assemblies;

Fig. 2A is a schematic representation of a second system in accordance with the present invention employed in on-line measurement with feedback control;

Fig. 2B is a schematic plan view of the relevant portion of Fig. 2B for demonstrating the manner of movement of the cameras relative to the movement of the contaminated fibrous material;

Fig. 3 shows a single-peak histogram representing summation of the number of pixels at each brightness level for a single-coloured sample (e.g. the control sample);

Fig. 4 shows a double-peak histogram representing summation of the number of pixels at each brightness level for a bicoloured sample, e.g. a sample of fibre assemblies contaminated with foreign matter under a transmitted light measuring mode; and

Fig. 5 shows a multi-peak histogram representing summation of the number of pixels at each brightness level (or colour) for a multi-coloured sample, e.g. a sample of fibre assemblies contaminated with foreign matter under a reflected light measuring mode.

Fibre assemblies may be categorised into tufts, fibre web, slivers, tops, rovings, yarns and fabrics. Samples of fibre assemblies may be selected having a predetermined mass depending on the category of the material and the nature of the contaminated foreign matter. In one embodiment of the present invention the sample is distributed regularly over a defined area forming a sandwich layer between a pair of transparent plates or templates. Control samples may be prepared, following the same procedure, from clean fibre assemblies free from the foreign matter. Other calibration and reference samples may also be prepared which already contain sorted types of foreign matter.

There are two modes of measurements, namely measurements with transmitted light and measurements with reflected light. The former is used to determine the foreign matter content (or trash content) by area and/or by mass with or without sorting or identification of the different types of contaminating foreign matter. The latter or both modes combined together can also be used for sorting, identification and counting of the different types of foreign matter.

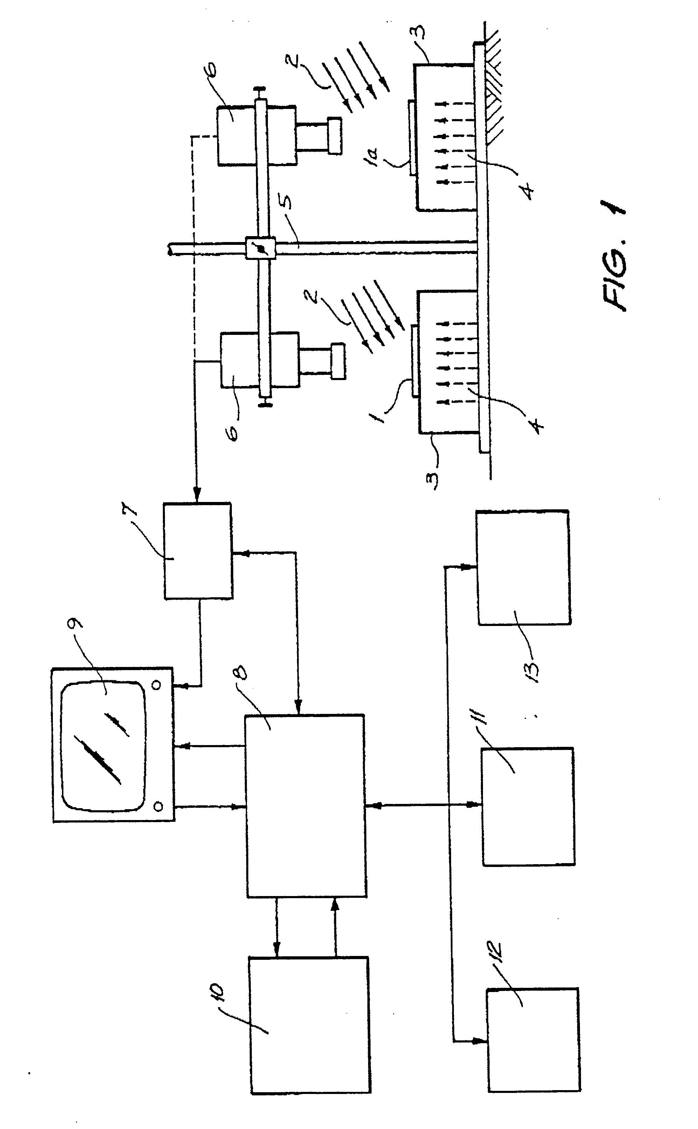

As shown in Fig. 1, a sample 1 is placed over a light box 3 and subjected to either transmitted regular light 4 when operating in a transmitted light measuring mode or falling regular light 2 when operating in a reflected light measuring mode. The control or calibration samples 1a are mounted in the same way over the same form of light box 3.

Sample 1 or 1a is viewed in each measuring mode by a video camera 6 and static photographs may be recorded on video tape or the like for later processing (as in the case of measurements in the field) and/or displayed directly on a T.V. type monitor 9 for immediate processing and analysis. By applying a technique of digital color picture processing using microprocessors, the sample photograph is digitized into a large number of picture element (pixels), e.g. into 256 x 256 ( = 64k) or 512 x 512 ( = 256k) pixels. Through a video digitizer 7,

the brightness level (or the colour) of each pixel is detected and evaluated numerically, e.g. from zero ( = OOH) for black to 255 ( = FFH) for white. Using a keyboard terminal 11 and through a microcomputer 8, the brightness level of each pixel is addressed into an image frame buffer 10 and may be retained in a file or stored onto a floppy disc (or other media) using a disk system 12. A hard copy of the results and their analysis may be obtained on a plotter/printer 13.

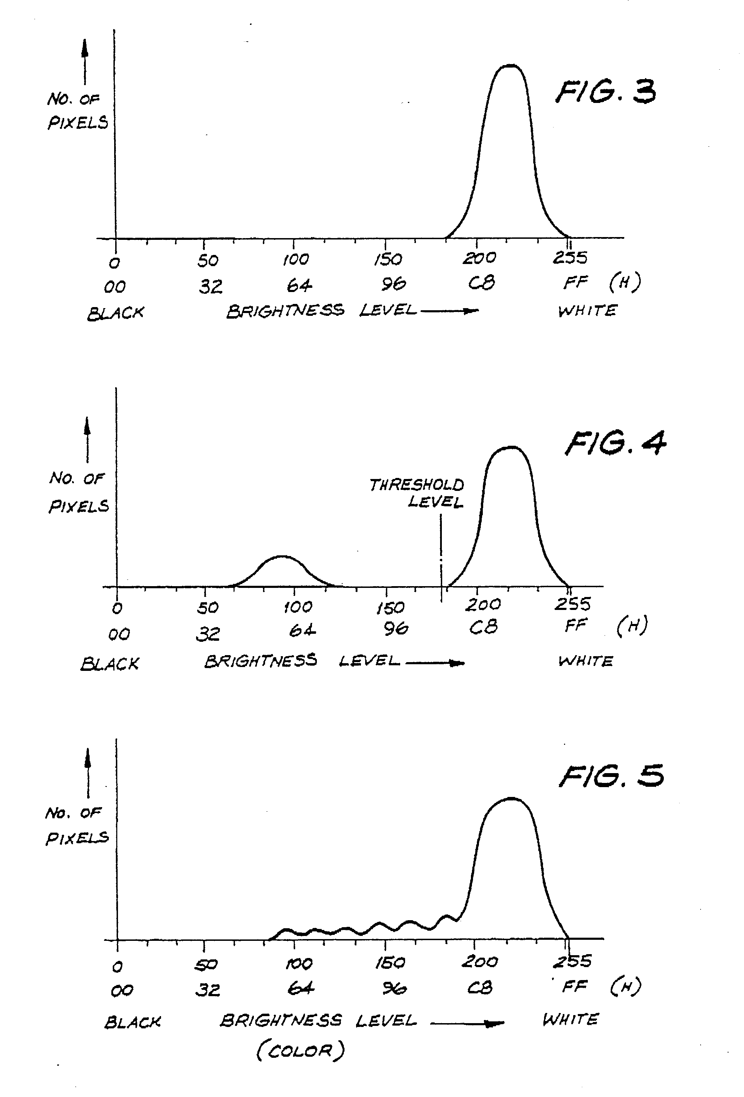

By computing the brightness level of each pixel throughout the sample picture, i.e. the digitized picture data, and manipulating that data, a histogram (or frequency curve) can be determined. This represents the summation of the number of pixels and consequently the total area occupied at each brightness level throughout the sample picture. For a single-coloured sample, e.g. for the control sample 1a of Fig. 1, which contains only clean fibre assemblies free from foreign matter, at both measuring modes, a single-peak histogram as shown in Fig. 3 will be obtained. For a bicoloured sample, e.g. for sample 1 of Fig. 1 under a transmitted light measuring mode, a double-peak histogram as shown in Fig. 4 will be obtained. One peak (on the right hand side of the graph) represents the brighter pixels of the fibrous background of the picture which is equivalent to that obtained by analysis of the control sample as exemplified by Fig. 3. The other peak represents the darker pixels occupied by the foreign matter. The ratio of the total number of pixels occupied by the foreign matter, i.e. the area under curve of the latter peak, to the total number of pixels occupied by the whole sample, e.g. 256 x 256 or 512 x 512 pixels, gives the value of the foreign matter content (or trash content) by area "$T_a$".

The foreign matter content (or trash content) by mass "$T_m$" can be determined as follows:
$$T_m = K_\rho T_a / [1 + T_a (K_\rho - 1)] \quad (1)$$
where $K_\rho$ is a calibration factor depending on the density of the foreign matter relative to the apparent density of the fibrous background in the sample. $K_\rho$ is constant for all tests carried out on fibre assemblies of the same category and under the same conditions. This need be determined only once for all relevant tests by carrying out a calibration test and using the following equation:
$$K_\rho = T_m (1 - T_a)/T_a(1 - T_m) \quad (2)$$

To count the number of foreign matter particles in a sample and to determine the size by area for each, analysis of the obtained digitized picture data is carried out in another way.

This can be done by scanning (or surveying) the positions of the pixels occupied by the foreign matter, i.e. the pixels with brightness level lower than a certain value (the threshold level) which separates between the dark foreign matter pixels and the brighter fibrous background pixels (see Fig. 4). The size of the foreign matter particle is determined by the summation (or integration of area) of the dark pixels which are adjacent to each other, i.e. the pixels occupied by one particle. To avoid scanning any dark pixel which might not represent foreign matter, the particles with sizes smaller than a certain limit may be discarded. From the area and perimeter of each particle, the corresponding shape factor can be determined.

By carrying out reference tests on the reference sample 1a which contains already sorted and known types of foreign matter particles, the ranges of size, brightness level and shape factor of each type can be measured. Comparison and discrimination of the values obtained for the sample under test (sample 1) against the corresponding ranges of values obtained by the reference sample 1a, sorting, identification and counting of the foreign matter particles in the test sample can be carried out.

For a multi-coloured sample, i.e. for sample 1 of Fig. 1 in the reflected light measuring mode, a multi-peak histogram as shown in Fig. 5 will be obtained. The last peak which represents the brightest pixels corresponds normally to the white fibrous background of the sample; it is equivalent to that obtained by the control sample 1a as exemplified by Fig. 3. The other peaks represent the summation of the number of pixels at each brightness level (or colour). This data is useful for counting, sorting and identification of the different types of the foreign matter particles, by following a similar procedure to that used in the transmitted light measuring mode.

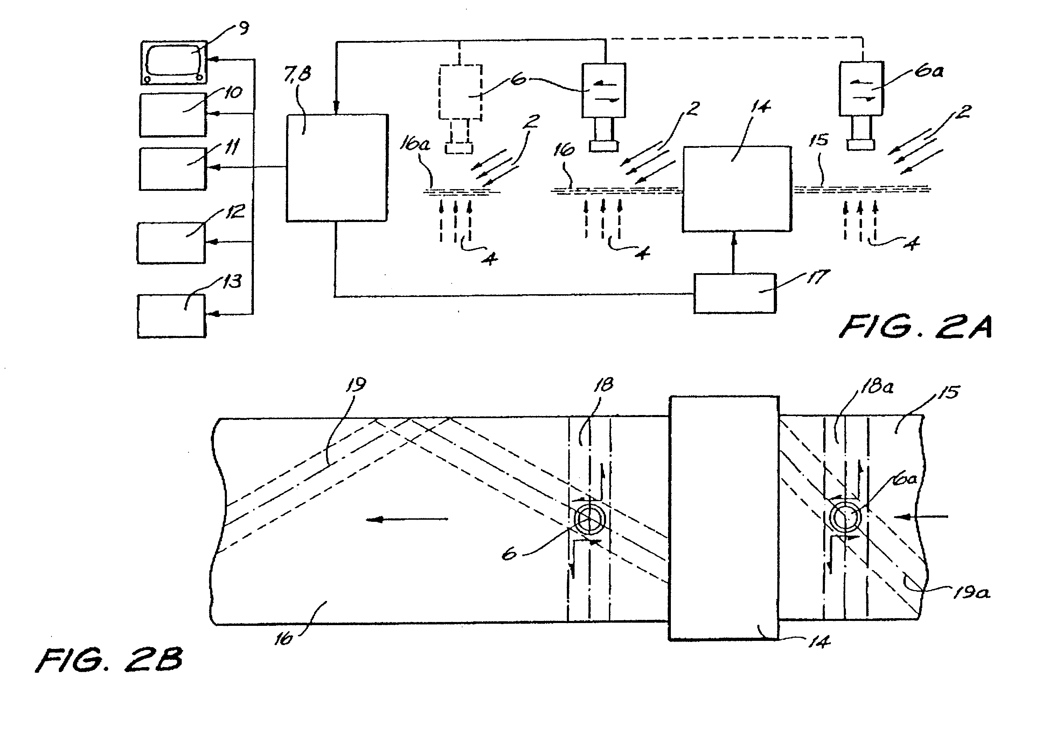

The present invention may also be applied for on-line measurements of foreign matter contamination at the end of or intermediate foreign matter removal processes, e.g. cleaners, cards or combers. This may provide a feedback for controlling the process to produce a certain quality of product. Fig. 2A and Fig. 2B show how a second embodiment of the invention is adapted for such a purpose. The input material 15, as a layer, is fed into a foreign matter removal process 14, e.g. a card or comber, and delivered as output material 16 also in a layer form, e.g. a fibre web. The cameras 6 and 6a are mounted over the output and input material, respectively. Depending on the type of automatic control system applied, whether closed loop, open loop or combination, camera 6 or camera 6a or both of them may be used. Depending on the category of material under test, transmitted light measuring mode, reflected light measuring mode or combination mode may be applied. Control, calibration and reference samples 16a may be tested under the same conditions using camera 6 or 6a before starting of the on-line measurements. The corresponding data is saved by the computer 8 to be used later for calibration and as references for the measurements. While the material 16 or 15 is moving continuously in one direction, the camera 6 or 6a moves over the material with double-phase motion; one is intermittent traversing motion across the material band and the other traversing parallel to the direction of material motion. In other words, the camera moves a certain distance across the material, stops, then moves in the direction of travel of the material until it arrives the same speed as that of the material, under this condition it photographs the material, thereafter the camera travels in the reverse direction and starts again to continue moving across the material. The purpose of this compound motion of the camera is to provide no relative motion between the camera and the material while the photographs are being taken, i.e. in this way, static photographs can be taken which are more advantageous in several respects than dynamic photographs. By using a microprocessor and its peripherals (7 to 13 in Fig. 1), the picture is digitized, the data is analyzed, and the results of the measurement are compared with the reference values. The time period between two consecutive photographs (or tests) is preadjusted such that it will be enough for the microprocessor to carry out the picture processing, data analysis and saving of the measurements. At each measurement event, the new picture data replaces the old data addressed in the image frame buffer 10 with only the results of the new measurement being saved. By comparing the obtained measurements with the corresponding nominal values of the required quality, a control signal is transmitted from the microprocessor 8 to a variable speed/variable setting device 17 which alters the efficiency of the process in the direction of producing the required product quality.

Experimentation has indicated that reflected light measurements support the results achieved by transmitted light but give results of lesser quality. It may be that reflected light measurement may be suitable as a substitute for direct visual determination of sample quality as has been previously undertaken.

It will be recognised by persons skilled in the art that numerous variations and modifications may be made to the invention as described above without departing from the spirit or scope of the invention as broadly described.

## Claims

1. A method of quantitatively measuring the amount and/or type of foreign matter contained in a fibre assembly comprising recording an image of that assembly and analysing that record by digital means which divides the record of the image into a plurality of digitized picture elements to each of which a brightness or colour value is ascribed, the brightness or colour value being within a range of values defined by predetermined upper and lower brightness or colour limit values, respectively; processing the brightness or colour values of said elements to determine the amount and/or type of foreign matter within the assembly.

2. A method as claimed in Claim 1 wherein the quantity of each type of foreign matter is determined by comparing values ascribed to different known types of foreign matter based upon their respective shapes with shape values calculated for each detected piece of foreign matter in the fibre assembly.

3. A method as claimed in claim 1 or 2 when carried out during processing of the fibre assembly, said processing having the effect of removing the foreign matter from the fibre assembly.

4. A method as claimed in claim 3 wherein there is provided a feedback control to the processing of the fibre assembly such that the efficiency of the processing is varied in dependance upon the amount and/or type of foreign matter detected in the fibre assembly after the processing.

5. A method is claimed in any one of the preceding claims wherein the image of the assembly is perceived by a video camera and each picture element corresponds to at least one pixel of the video image.

6. A system for quantitatively measuring the amount and/or type of foreign matter contained in a fibre assembly comprising camera means for photographing an image of that assembly, digital means for digitally analysing said image whereby a brightness or colour value is ascribed to each of a plurality of elements of said image, and processing means for processing the brightness or colour values of said elements to determine the amount and/or type of foreign matter in the assembly.

7. A system as claimed in claim 6 comprising recording means for storing the image or a digitized record of the image for later processing.

8. A system as claimed in claim 6 or 7 wherein the camera is mounted to scan a travelling fibre assembly so as to capture static images of the assembly.

9. A system as claimed in any one of claims 6 to 8 wherein said system provides feedback control means for varying a processing operation applied to the fibre assembly.

FIG. 1

0 226 430

FIG. 2A

FIG. 2B

FIG. 3

FIG. 4

FIG. 5